# EUROPÄISCHE PATENTANMELDUNG

(11) **EP 0 535 688 A1**
(43) Veröffentlichungstag der Anmeldung: **07.04.1993**
(21) Anmeldenummer: 92116864.7
(22) Anmeldetag: 02.10.1992
(51) Int. Cl.: A61J 1/10

(54) **Spornbestücktes Verpackungssystem**

(30) Priorität: 04.10.1991 US 772086
(71) Anmelder: Fresenius AG, D-61350 Bad Homburg (DE)
(72) Erfinder: Slater, Glenn L., Ogden Utah 84403 (US); Virdee, Pritpal, New Brunswick New Jersey 08903 (US)
(74) Vertreter: Fuchs, Luderschmidt & Partner Patentanwälte

(57) **Zusammenfassung**

Es wird ein abgeschlossener Beutel (12) aus flexibler Plastikfolie zur Aufnahme von Flüssigkeiten beschrieben, der mit einem Spornanschluß durch ein Spornanschlußstück (50) durchstoßen werden kann. Das Spornanschlußstück (50) ist zwischen zwei Faltungen (32,38) auf einer Seite (26) des Beutels (12) eingedichtet, so daß die innere Öffnung des Kanals (60) an die gefaltete Plastikfolie angrenzt. Der Sporn (80) wird durch den Kanal (60) des Spornanschlußstücks (50) geführt und durchbohrt die Plastikfolie, um den Beutel (12) anzuzapfen und die Flüssigkeit zu entnehmen. Undichtigkeiten werden verhindert durch die Abdichtung zwischen der Plastikfolie und dem Sporn (80) und die Abdichtung zwischen dem Beutel (12) und dem Spornanschlußstück (50).

## Beschreibung

### Gegenstand der Erfindung:

Die vorliegende Erfindung beschreibt einen flexiblen abgeschlossenen Beutel zur Verpackung von Flüssigkeiten. Der Behälter hat ein angefügtes Anschlußstück, welches mit einem Spornrohr durchstoßen werden kann. Der Behälter und das Spornsystem finden besonders Anwendung bei der keimfreien Verpackung von Nahrungsmitteln einschließlich Flüssigkeiten zu enteralen Ernährung.

### Hintergrund der Erfindung:

Es ist eine anwachsende Beliebtheit für Flüssigkeitsverpackungssysteme zu beobachten, die einen durchstoßbaren Behälter und einen Spornauslaufanschluß verwenden. Der Behälter kann aus einem halbharten Karton oder einer flexiblen Plastikfolie bestehen. Der Spornauslauf ist typischerweise ein Zapfen, der eindringt und gegen die Karton- oder Plastikfolienwand des Behältes abdichtet. Diese Systeme haben einen weiten Anwendungsbereich, der von der keimfreien Verpackung von normalen Nahrungsmittel, wie Fruchtsaft, über die Verpackung von enteralen Nahrungsmitteln bis zur Verpackung von pharmazeutischen Präparaten, wie Flüssigkeiten zur intravenösen oder peritonealen Verabreichung, reicht.

Unter den Vorteilen dieser Systeme sind ihr geringes Gewicht, ihre niedrigen Kosten und ihre einfache Anwendung zu nennen. Weiterhin, im Fall der Behälter aus Plastikfolie, können diese Behälter im leeren und zusammengeklappten Zustand in einem sehr kleinen Volumen transportiert werden und dann vor dem Gebrauch gefüllt werden. Nach dem Gebrauch kann der Behälter erneut zusammengefaltet und in einem kleinen Volumen abgegeben werden. Die Behälter aus Plastikfolie eignen sich auch zur sterilen Verpackung durch nach dem Stand der Technik bekannte automatische Fabrikations- und Füllmaschinen.

Ein prinzipieller Nachteil dieser Systeme ist die gelegentliche Schwierigkeit und der Aufwand, Zugriff auf die in ihnen verpackte Flüssigkeit zu erlangen. Der Zugriff erfolgt üblicherweise durch einen extra für diesen Zweck konstruierten Spornanschluß. Der Spornanschluß kostet möglicherweise mehr als der Behälter ansich. Aus Gründen der Sterilität und Hygiene ist er normalerweise nicht wiederverwendbar. Weiterhin dichtet der Spornanschluß möglicherweise nicht immer sicher gegen die Wand des Behälters, so daß der Anschluß undicht werden kann. Die Abdichtung kann durch Benutzung von auf Gummi basierenden Materialien in der Behälterwand verbessert werden. Solche Materialien haben aber möglicherweise eine unzulängliche Festigkeit oder Widerstandskraft gegen Abbau durch Licht oder sie sind schwierig zu sterilisieren oder herzustellen durch Hitzeverschweißungstechniken.

Ein Beispiel für einen Spornanschluß zur Anzapfung einer halbharten keimfreien Kartonverpackung ist in der US-PS 4,826,500 für ein enternales Nahrungszuführungssystem beschrieben. Diese Anordnung umschließt einen Sporn zur Durchstoßung der Behälterwand, einen Verbindungsgang für Flüssigkeiten durch den Sporn, einen Verbindungsgang für Zusatzluft durch den Sporn und eine Gewindeanordnung an dem äußeren Umfang des Sporns zur Verbindung und Abdichtung gegen die Behälterwand. Eine Verbesserung dieses Konzeptes ist in der US-PS 5,000,349 für eine keimfreie Anzapfung für Verpackungen beschrieben. Hierin wird das Sporngewinde als ein Mittel zur Verbindung und Abdichtung gegen die Behälterwand ersetzt durch eine Nockenanordnung, die mit einer in achsialer Richtung kompressiblen und in radialer Richtung erweiterbaren Muffe zusammenwirkt zur Verbindung und Abdichtung gegen das durchstochene Loch in der Wand. Infolgedessen muß kein Sporn in den Behälter eingeschraubt werden. Diese Anordnungen sind in erster Linie zur Benutzung bei halbstarren Kartonbehälter entwickelt worden und nicht für die Bentuzung bei Behältern aus flexibler Plastikfolie.

Ein Beispiel für ein System zur Benutzung bei Behälter mit flexibler Plastikfolie wird in der US-PS 4,567,999 beschrieben. Dieses Patent beschreibt ein klebendes Anschlußstück, das auf der äußeren Oberfläche der Plastikfolie angebracht werden kann. Eine im Anschlußstück verschiebbar montierte und von einer Schlauchmuffe umgebene Spitze durchbohrt die Plastikfolie; anschließend wird die Spitze zurückgezogen, während die Muffe in der Plastikfolie bleibt, so daß die Flüssigkeit durch die Muffe laufen kann. Wenn die Anordnung nicht fehlerlos auf die Folie geklebt ist, wird Flüssigkeit auslaufen. Somit erscheint diese Anordnung ziemlich kompliziert und aufwendig in der Herstellung.

Es existieren noch andere Anordnungen zum Anschließen von Behältern aus flexibler Plastikfolie, einschließlich der US-PS 4,640,425, 4,553,971, und 4,830,205. Die US-PS 4,640,425 und 4,830,205 beschreiben Behälter mit einer verschweißbaren Winkelanordnung zur Bildung einer Tasche und Aufnahme eines angeschlossenen Saugnippels. Die US-PS 4,553,971 beschreibt Behälter, die eine verschließbare Tasche haben zur Aufnahme eines angeschlossenen abbrechbaren Verschlusses, der mit einer Nadel durchstoßen werden kann. Jede dieser Erfindungen erfordert eine fehlerfreie Abdichtung zwischen dem Anschlußstück und der Plastikfolie, um jede Undichtigkeit zu vermeiden.

### Zusammenfassung der Erfindung:

Die vorliegende Erfindung betrifft einen abgeschlossenen Beutel aus flexibler Plastikfolie, der mit normalen automatischen Maschinen hergestellt und gefüllt werden kann. Der Beutel ist durchbohrbar mit einem Spornanschluß, der gegen den Beutel doppelt abgedichtet ist, um jede Undichtigkeit zu vermeiden.

In einer bevorzugten Ausführung ist der Behälter mit einer abgewinkelten Tasche versehen, die mit dem Sporn durchbohrt werden kann. Ein Spornkanal ist innerhalb der äußeren Abdichtung der abgewinkelten Tasche eingedichtet und der Behälter wird zusammen mit dem Spornkanal als integrierte abgedichtete Einheit hergestellt und transportiert. Zur Benutzung wird der Sporn in den Spornkanal eingeführt und durchbohrt die Wand zwischen der abgewinkelten Tasche und dem Behälter, so daß die Flüssigkeit aus dem Sporn ausfließen kann. Undichtigkeiten werden verhindert durch die doppelte Abdichtung zwischen der Wand, die sich zwischen der abgewinkelten Tasche und dem Behälter befindet, und dem Sporn, und, falls diese Dichtung unvollkommen sein sollte, die Dichtung zwischen dem Spornkanal und dem Sporn. Um diese Dichtungen zu verstärken, kann die flexible Plastikfolie des Behälters aus einem nach dem Stand der Technik bekannten Material sein, das gegen ein durchbohrendes Element abdichtet, und der Spornkanal kann einen geringfügig kleineren Durchmesser als der äußere Durchmesser des Sporns haben, so daß sich der Sporn oder der Spornkanal gegeneinander verformen. Der Spornkanal kann die äußere Gestalt eines Keils oder einer anderen Bauart haben, so daß seine Plazierung und Abdichtung innerhalb des Containers erleichtert wird.

In einer anderen bevorzugten Ausführung wird der Spornkanal entweder während der Herstellung oder zu einem späteren Zeitpunkt auf die äußere Oberfläche des Behälters aufgeklebt. Der Spornkanal enthält in dieser Ausführung eine durchbohrbare äußere Wand, die gegen die äußere Oberfläche des Sporns abdichtet. Die doppelte Abdichtung ist so durch die Dichtung zwischen dem Sporn und der Behälterwand und durch die Dichtung zwischen dem Spornkanal und dem Sporn voll ausgebildet.

### Die Zeichnung zeigt:

- Fig. 1: eine Vorderansicht einer bevorzugte Ausführungsform der Erfindung,
- Fig. 2: eine Teilansicht des Schnittes II-II von Fig. 1,
- Fig. 3: eine Teilansicht des Schnittes III-III von Fig. 1,
- Fig. 4: eine Vorderansicht des Schnittes IV-IV von Fig. 1,
- Fig. 5: zeigt eine vergrößerte Ansicht des Spornanschlußstutzens und des Sporns der vorliegenden Erfindung,
- Fig. 6: zeigt eine vergrößerte Ansicht des Sporns der vorliegenden Erfindung vor der Einführung in den Beutel,
- Fig. 7: zeigt eine andere Ausführungsform des Sporns der vorliegenden Erfindung vor der Einführung in den Beutel,
- Fig. 8: zeigt eine Vorderansicht einer anderen Ausführungsform der Erfindung,
- Fig. 9: zeigt eine Teilansicht des Schnittes IX-IX von Fig. 8,
- Fig. 10: zeigt dieselbe Vorderansicht wie Fig. 9 mit einem Sporn in Funktionslage,
- Fig. 11: zeigt eine bevorzugte Ausführungsform der Erfindung in der Hängeanordnung.

### Detallierte Beschreibung der Erfindung:

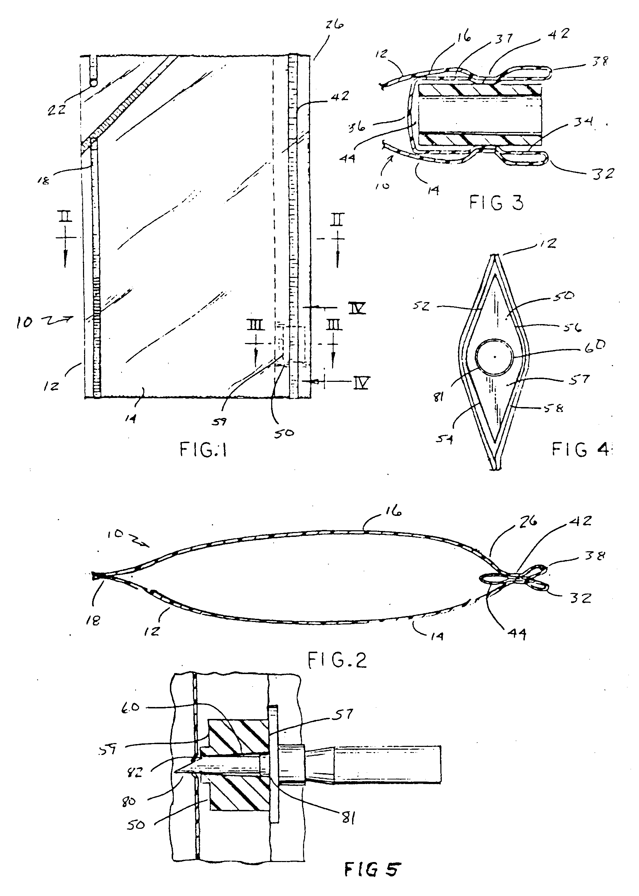

Eine bevorzugte Ausführungsform der Erfindung in Fig. 1 dargestellt. Das Verpackungssystem 10 beinhaltet einen Beutel 12, der eine Plastikfolienvorderseite 14 und eine Plastikfolienrückseite 16 besitzt, die durch eine Umfangshitzeversiegelung 18, eine Klebung oder ein anderes angemessenes Mittel miteinander versiegelt sind. Die Plastikfolien sind vorzugsweise aus einem Material, das gegen ein Durchdringungselement abdichtet, wie zum Beispiel "Sclair" von DuPont. Eine der oberen Ecken des Beutels 12 hat eine Öse 22, die durch Hitzeverschweißung innerhalb des Beutels erzeugt wird und an der der Beutel mit einem Haken oder einem anderen geeigneten Mittel aufgehängt werden kann, so wie es im folgenden beschrieben wird.

Die Seite 26 des Beutels 12 gegenüber der Öse 22 ist mit einem Satz von Faltungen und Hitzeverschweißungen zur Bildung einer abgewinkelten Tasche ausgebildet, so wie es in den Teilansichten der Figuren 2 und 3 dargestellt ist. Aus diesen Ansichten ist ersichtlich, daß sich die Vorderseitenfolie 14 zur Kante des Beutels 12 erstreckt und dann an der Vorderseitenfalte 32 zurück zur Mitte des Beutels 12 gefaltet ist. Sie erstreckt sich über eine geeignete Strecke einwärts (ungefähr 2,5 cm, wie es in der bevorzugten Ausführungsform dargestellt ist) zur Mitte des Beutels 12 unter Bildung eines vorderen Innenbereichs 34. Anschließend wird sie wieder an einer Innenfalte 36 gefaltet und erstreckt sich zur Kante des Beutels 12 unter Bildung eines hinteren Innenbereichs 37. Wenn sie wieder die Kante des Beutels 12 erreicht, ist sie wiederum an einer Rückseitenfalte 38 zurück zur Mitte des Beutels 12 gefaltet und geht somit in die Rückseitenplastikfolie 16 über. Somit wird eine einzige Plastikfolie gefaltet und zurückgefaltet unter Bildung der Vorderseite 14, des vorderen Innenbereichs 34, des hinteren Innenbereiches 37 und der Rückseite 16. Die Faltungen werden an der Vorderseitenfalte 32, an der Innenseite 36 und an der Rückseitenfalte 38 durchgeführt. Die gefaltete und zurückgefaltete Plastikfolie ist im wesentlichen an der Linie 42 längs der Vorderseite 14, des vorderen Innenbereichs 34, des hinteren Innenbereichs 37 und der Rückseite 16 hitzeverschweißt, so daß eine Tasche 44 geformt ist, die begrenzt wird durch den vorderen Innenbereich 34 an der Vorderseite, den hinteren Innenbereich 37 an der Rückseite, die Innenseite 36 an der Seite zur Mitte des Beutels 12, und die Schweißnaht 42 zur Seite des Beutels 12.

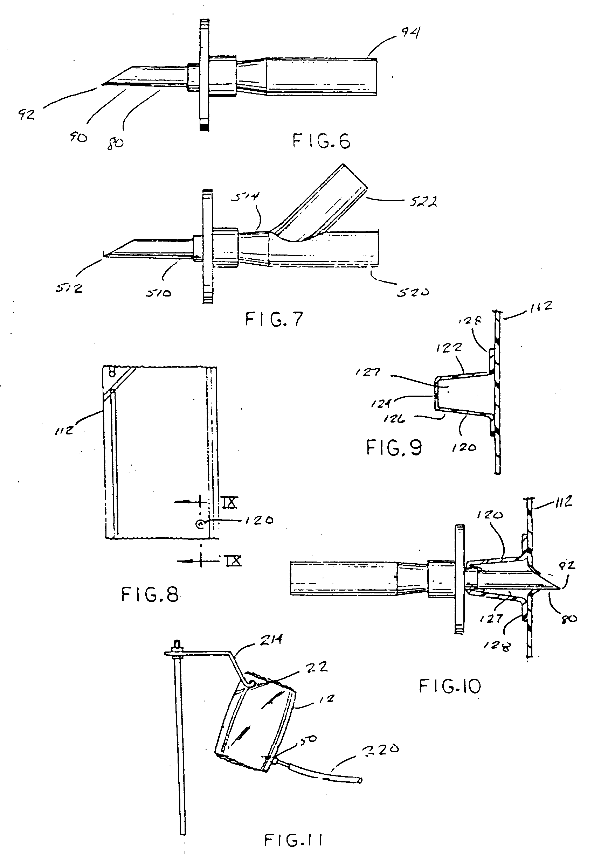

Figur 4 ist eine Vorderansicht des Schnittes IV-IV von Fig. 1 und zeigt ein Spornanschlußstück 50, der in den Beutel 12 eingeschweißt ist. In der bevorzugten Ausführungsform ist das Spornanschlußstück 50 ein keilförmiges Element. Es besitzt eine obere Vorderseite 52, eine untere Vorderseite 54, eine obere Rückseite 56 und eine untere Rückseite 58. Es besitzt ebenso eine Außenseite 57 und eine Innenseite 59, wie in Fig. 1 gezeigt. Das Anschlußstück 50 ist vorzugsweise aus Polyethylen hergestellt. Durch den Körper des Anschlußstückes 50 führt ein Spornkanal 60 zur Aufnahme des Sporns 80, wie er im folgenden beschrieben ist und in der Fig. 5 gezeigt ist. Der Spornkanal 60 hat einen sich vom Kanaleinlaß 81 zum Kanalauslaß 82 reduzierenden Durchmesser. Der Durchmesser des Kanaleinlasses 81 ist etwas größer als der äußere Durchmesser des Sporns 80 und der Durchmesser verringert sich allmählich, so daß der Durchmesser des Kanalauslaßes 82 etwas kleiner als der äußere Durchmesser des Sporns 80 ist. Auf diese Weise nimmt der Spornkanal 60 leicht den Sporn 80 auf. Wenn der Sporn 80 durch den Kanal 60 geschoben wird, erreicht er einen Punkt auf dem Weg durch den Kanal, an dem er den Kanal ganz ausfüllt. Wird der Sporn 80 über diesen Punkt hinausgeschoben, so werden der Sporn 80 und der Kanal 60 verformt und er wird somit eine flüssigkeitsdichte Abdichtung zwischen den beiden erzeugt. Die exakten Dimensionen können unterschiedlich sein und sind abhängig von den für den Anschlußstutzen 50 und den Sporn 80 verwendeten Materialien. In der bevorzugten Ausführungsform, in der der Anschlußstutzen aus Polyethylen und der Sporn aus ABS hergestellt ist, wurden befriedigende Ergebnisse mit einem Spornaußendurchmesser von 0.190 inch, einem Durchmesser des Kanaleinlaßes 81 von 0.210 inch und einem Durchmesser des Kanalauslaßes 82 von 0.180 inch erzielt.

Die Keilform des Anschlußstückes 50 erleichtert seine Befestigung an den Beutel 12. Die Befestigung wird erreicht durch die oben beschriebenen Faltungen des Beutels und der anschließenden Plazierung des Anschlußstückes 50 zwischen dem vorderen Innenbereich 34 und dem hinteren Innenbereich 37, so daß die Innenseite 59 des Anschlußstückes 50 nahe aber nicht notwendigerweise in Kontakt mit der Innenfalte 36 der Faltungen der Plastikfolie ist. Die gefaltete Plastikfolie wird dann in der oben beschriebenen Weise an der Schweißlinie 42 hitzeverschweißt, wobei das Anschlußstück 50 so angeordnet wird, daß die Plastikfolie direkt auf das Anschlußstück 50 hitzeverschweißt wird. Dies kann mit einer speziellen Wärmeschweißelektrode vorgenommen werden, die dem Anschlußstück entspricht. Die verschweißte Vorrichtung umfaßt sodann das Anschlußstück 50, dessen obere Vorderseite 52 und untere Vorderseite 54 an den vorderen Innenbereich 34 der Plastikfolie, und dessen obere Rückseite 56 und untere Rückseite 58 an den hinteren Innenbereich 37 der Plastikfolie angeschweißt sind.

Dieser Aufbau führt zu einer derartigen Anordnung des Anschlußstücks, daß der Durchgang des Spornkanals 60 ermöglicht, daß sich der Sporn 80 zwischen der Außenseite des Beutels 10 und der Beuteltasche 44 befindet. Die Beuteltasche 44 ist vom Innern des Beutels selbst getrennt. Infolgedessen kann eine Flüssigkeit, die von dem Beutelninnern in die Beuteltasche 44 eintritt, nicht die Außenseite des Beutel erreichen, es sei denn durch den Sporn 80, der in den Spornkanal 60 des Anschlußstücks 50 eingreift und gegen diesen abgedichtet ist.

Der Beutel wird in Übereinstimmung mit herkömmlichen Beutelherstellungsverfahren hergestellt, wobei jedoch das Spornanschlußstück 50 auf die zuvor beschriebene Weise an Ort und Stelle eingeschweißt wird. Das Herstellungsverfahren kann automatisiert werden. Es kann ferner auch das Füllen des Beutels mit der gewünschten Flüssigkeit, entweder unter sterilen oder nicht-sterilen Bedingungen in einem automatisierten oder manuellen Verfahren umfassen.

Zum Gebrauch wird der Beutelsporn 80 in den Kanaleinlaß 81 eingeführt und durch den Spornkanal 60 des Spornanschlußstücks 50, wie in Figur 5 dargestellt, geführt. Wenn die Spitze des Sporn 80 durch den Spornkanal 60 hindurch- und über den Kanalauslaß 82 hinausgeht verformen sich der Sporn und der Spornkanal gegeneinander, da der innere Teil des Kanals einen Durchmesser aufweist, der weniger als der Durchmesser des Sporns beträgt. Sodann tritt die Spornspitze aus dem Kanal 82 aus. Ein fortgesetzter, nach innen gerichteter Druck auf den Sporn 80 führt dazu, daß er sich weiter durch den Kanal 60 verschiebt, bis die Spornspitze gegen die Plastikfolie drückt, und zwar bei annähernd der Innenfalte 36 zwischen dem vorderen Innenbereich 34 und dem hinteren Innenbereich 37. Ein stärkerer, nach innen gerichteter Druck auf den Sporn bewirkt, daß er sich weiter durch den Kanal 60 verschiebt und die Plastikfolie durchsticht. Der Sporn wird sodann so angeordnet, daß er sich durch den Kanal 60 und durch die Plastikfolie des Beutels erstreckt. Hierdurch kann Flüssigkeit aus dem Beutel durch den Durchgang im Sporn fließen. Wie zuvor angegeben, kann die Plastikfolie aus einem Material bestehen, das sich gegen die Außenfläche des Sporn abdichtet, wodurch verhindert wird, daß Flüssigkeit um den Sporn herum ausläuft.

Diese Ausführungsform ist außerordentlich leckdicht. Der Beutel ohne Sporn ist völlig abgedichtet ohne jede Möglichkeit eines Lecks. Nach Einfügen des Sporns durch den Kanal in den Beutel ist das System noch doppelt abgedichtet. Erstens ist durch die Abdichtung zwischen der Plastikfolie und dem Sporn Flüssigkeit vor einem Auslaufen aus dem Beutel entlang der Außenfläche des Sporns geschützt. Zweitens wird jede Flüssigkeit, die in dieser Richtung auslaufen sollte, unmittelbar in der Tasche 44 ausgefangen. Sie kann nicht aus dem Beutel entlang der Außenfläche des Anschlußstücks 50 austreten, weil diese Außenfläche mit der Plastikfolie längs der Schweißlinie wärmeverschweißt ist. Aus dem Beutel kann sie ebensowenig längs der Außenfläche des Sporns austreten, weil diese Oberfläche in den Spornkanal 60 dicht eingelassen ist.

In Figur 6 ist der Sporn 80 vergrößert dargestellt. Er umfaßt in der Regel ein gestrecktes Teil 90 mit einer scharfen Spitze 92 an einem Ende, die das Material der Plastikfolie des Beutels durchstechen kann. Am anderen Ende ist ein Kupplungsstück 94 angeordnet, um den Sporn an eine nicht dargestellte Schlauchleitung anzukoppeln. Von nahezu der Spitze 92 durch den gestreckten Teil 90 und zur Kupplung 94 erstreckt sich ein Durchgang für die Flüssigkeit.

Figur 7 zeigt eine alternative Ausführungsform eines Sporns 510. Diese Ausführungsform hat eine Spitze 512 und ein Körper 514, wie bei der anderen Ausführungsform, jedoch sind zwei Auslaßöffnungen 520 und 522 vorhanden. Die erste Auslaßöffnung 520 dient zum Anschluß des Schlauches (nicht dargestellt), der zum Patienten führt, während die zweite Auslaßöffnung 522 zum Anschluß an einen anderen Schlauch dient, der zu einem anderen Behälter (nicht dargestellt) führt. Der andere Behälter kann eine Flüssigkeit enthalten, welche der Flüssigkeit des ersten Behälters zur Zuführung zum Patienten gleicht. Der andere Behälter kann aber auch eine zusätzliche Flüssigkeit enthalten, welche dem ersten Behälter zugegeben werden soll. Auf diese Weise ermöglicht der Sporn ein leichtes Vermischen von Flüssigkeiten. Jede der Auslaßöffnungen 512 und 522 kann ein oder mehrere Absperrglieder, die sich auf Vorsprüngen befinden können, zum Verschließen des Auslaßes aufweisen, wenn dieser nicht in Gebrauch ist.

Eine andere bevorzugte Ausführungsform ist in den Figuren 8, 9 und 10 gezeigt. Bei diesen Ausführungsformen ist der ganze Beutel 112 ohne das Spornanschlußstück abgedichtet. Das Spornanschlußstück 120 dieser Ausführungsform umfaßt ein becherförmiges Element 122 mit einem im wesentlichen flachen Ende 124 und einer zyindrischen Seite 126, durch die sich ein Kanal 127 zur Aufnahme des Sporns erstreckt. Um die Basis der zylindrischen Seite 126 erstreckt sich eine Befestigungsflansch 128. Der Befestigungsflansch 128 weist eine dem becherförmigen Element 122 gegenüberliegende Seite für einen Klebstoff auf, die an die Plastikfolie des Beutels angeklebt werden kann. Gewünschtenfalls kann der Klebstoff zuvor auf den Flansch aufgebracht und bis zur Verwendung des Spornanschlußstücks mit einer abziehbaren Abdeckung bedeckt sein, oder der Klebstoff kann unmittelbar vor Gebrauch des Flansches auf diesen aufgebracht werden.

Das flache Ende 124 des Spornanschlußstutzens 120 ist verhältnismäßig dünnwandig, so daß es durch den Sporn durchstochen werden kann. Die Abmessungen der Wand und die Art des Materials, aus dem die Wand hergestellt ist, können derart sein, daß die Wand sich gegen die Außenfläche des Sporns abdichtet, wenn der Sporn die Wand durchdringt.

Beim Gebrauch wird das Spornanschlußstück 120 mittels des Klebstoffs auf der Oberfläche des Flansches 128 mit der Plastikfolie des Beutels 112 verklebt, und zwar vorzugsweise in Nähe einer der unteren Ecken des Beutels. Der Sporn 80 wird sodann zum Durchstoßen der Endwand 124 des Spornanschlußstücks verwendet und er wird so durch den Kanal 127 geschoben, daß die Spornspitze 92 der Plastikfolie des Beutels 112 gegenüberliegt. Der Sporn wird sodann weiter durch den Kanal geschoben, so daß die Spornspitze 92 die Plastikfolie durchsticht, und der Sporn in das Beutelinnere eindringt. Dann kann die Flüssigkeit in den Sporn durch die Spornöffnung und den Durchgang und die Kupplung des Sporns in den Schlauch fließen, mit dem der Sporn verbunden ist.

Wie bei der anderen Ausführungsform, hat diese Ausführungsform zwei verschiedene Schranken, um ein Auslaufen der Flüssigkeit zu verhindern. Die erste ist die Abdichtung zwischen dem gestreckten Spornteil 90 und der Wand der Plastikfolie. Vorzugsweise besteht die Plastikfolie aus einem Material, das sich gegen eindringende Elemente abdichtet. Im Falle, daß etwas Flüssigkeit über diese Abdichtung und längs der Außenfläche des Spornschafts ausläuft, tritt die Flüssigkeit in den Spornkanal. Sie sollte jedoch innerhalb des Spornkanals infolge des Klebeverschlußes zwischen dem Flansch 128 des Spornkanals und der Plastikfolie sowie infolge der Abdichtung zwischen der Außenfläche des Spornschafts und der Wand des Endes 124 des Spornanschlußstücks innerhalb des Spornkanals zurückgehalten werden. In Figur 11 ist das spornbestückte Verpackungsystem gemäß vorliegender Erfindung im Gebrauch dargestellt. Der Beutel 112 hängt mit seiner Öse 22 an einem Ständer 214. Da die Öse 22 sich an einer der oberen Beutelecken befindet, hängt der Beutel derart, daß seine Längsränder sich in einem Winkel zur Vertikalen befindet. Der genaue Winkel hängt von der genauen Plazierung der Öse und den Gesamtabmessungen des Beutels ab. In der Regel kann jedoch für typischerweise dimensionierte Beutel und herkömmlichen Anordnungen der Öse ein Winkel von 20-30° zur Vertikalen erwartet werden.

Das Spornanschlußstück 50 ist in Nähe der Beutelecke der Öse 22 diagonal gegenüber angebracht, so daß es in Nähe des unteren Punkts des hängenden Beutels liegt. Die Kupplung des Sporns ist mit einem Schlauch 220 verbunden, der abwärts zum Patienten führt. Wenn die Flüssigkeit im Beutel aus diesem aus- und durch den Sporn und das Rohr in den Patienten fließt, verursacht die abfließende Flüssigkeit ein allmähliches Zusammenfallen des Beutels. Da der Beutel sich einem totalen Zusammenfallen nähert, wenn die Flüssigkeit im wesentlichen aus dem Beutel abgeflossen ist, zieht die im Schlauch befindliche Flüssigkeitssäule nahezu den gesamten Rest der Flüssigkeit heraus, so daß sich der Beutel praktisch vollständig entleert. Der Beutel verbleibt somit mit überraschend wenig Flüssigkeit.

### Bezugszeichenliste

- 10: spornbestücktes Verpackungssystem
- 12: Beutel
- 14: Vorderseite aus Plastikfolie
- 16: Rückseite aus Plastikfolie
- 18: Schweißnaht
- 22: Öse
- 26: gefaltene Seite des Beutels
- 32: Vorderseitenfalte
- 34: vorderer Innenbereich
- 36: Innenfalte
- 38: Rückseitenfalte
- 37: hintere Innenbereich
- 42: Schweißlinie
- 44: Tasche
- 50: Spornanschlußstück
- 52: obere Vorderseite
- 54: untere Vorderseite
- 56: obere Rückseite
- 57: Außenseite
- 58: untere Rückseite
- 59: Innenseite
- 60: Spornkanal
- 80: Sporn
- 81: Kanaleinlaß
- 82: Kanalauslaß
- 90: gestrecktes Teil
- 92: scharfe Spitze
- 94: Kupplungsstück
- 510: Sporn
- 512: Spitze
- 514: Körper
- 520: Auslaßöffnung
- 522: Auslaßöffnung
- 112: Beutel
- 120: Spornanschlußstutzen
- 122: becherförmiges Element
- 124: flaches Ende
- 126: zylindrische Seite
- 127: Kanal
- 128: Befestigungsflansch
- 214: Ständer
- 220: Schlauch

## Patentansprüche

1. Verpackungsvorrichtung für Flüssigkeiten zur Verwendung mit einem zapfenförmigen Sporn, umfassend einen flexiblen Beutel zur Aufnahme der Flüssigkeit, wobei der Beutel eine mit dem Sporn durchdringbare Wand umfaßt; eine mit dem Beutel derart verbundene Tasche, daß das Innere der Tasche vom Inneren des Beutels durch die durchdingbare Wand abgetrennt ist; und Mittel zum Zugang in das Beutelinnere mit dem Sporn.

2. Vorrichtung gemäß Anspruch 1, dadurch gekennzeichnet, daß die durchdringbare Wand eine flexible Plastikfolie umfaßt, die vorzugsweise in die Beutelwand integriert ist und sich gegen ein eindringendes Element abdichtet.

3. Vorrichtung gemäß Anspruch 1, dadurch gekennzeichnet, daß die Mittel zum Zugang der Tasche einen vom Inneren der Tasche zu ihrem Äußeren verlaufenden Kanal, zur Aufnahme des Sporns dient, und vorzugsweise ein Anschlußstück umfassen, das sich vom Inneren zum Äußeren des Beutels erstreckt, wobei das Anschlußstück einen an der Taschenwand befestigten Körper und einen durch den Körper vom Inneren zum Äußeren des Beutels sich erstreckenden Kanal aufweist, und das an seiner Außenseite an die Taschenwand angeschweißt ist.

4. Vorrichtung gemäß Anspruch 3, dadurch gekennzeichnet, daß der Kanal des Anschlußstücks einen ersten Durchmesser am Außenteil des Kanals aufweist, der größer ist als der Sporndurchmesser, um den Sporn aufzunehmen, und einen zweiten Durchmesser am Innenteil des Kanals, der kleiner als der Durchmesser des Sporns ist, so daß der Sporn sich gegen den zweiten Durchmesser abdichtet, wenn der Sporn durch den Kanal eingeführt wird, wobei sich vorzugsweise die Innenfläche des Kanals sich vom ersten zum zweiten Durchmesser graduell verjüngt.

5. Vorrichtung gemäß Anspruch 1-4, dadurch gekennzeichnet, daß die Tasche mit einer Taschenverschweißung verschweißt ist, welche zwei gegenüberliegende Seiten aus Plastikfolie der Tasche verbindet, und daß das Anschlußstück zwischen diesen Seiten angeordnet und mit diesen verschweißt ist, wobei vorzugsweise der Körper des Anschlußstücks eine im wesentlichen senkrecht zur Kanalachse und parallel zur Taschenverschweißung verlaufende Abmessung aufweist, die länger als die im wesentlichen senkrecht zur Kanalachse und senkrecht zur Taschenverschweißung verlaufende Abmessung ist, wodurch die Seiten aus Plastikfolie der Tasche auf dem Körper des Anschlußstückes gleichmäßig und kontinuierlich abgedichtet sind.

6. Vorrichtung gemaß Anspruch 1-5, dadurch gekennzeichnet, daß eine einzige Plastikfolie zumindest einen Teil der Beutelwand zwischen dem Inneren und dem Äußeren des Beutels bildet und vorzugsweise zumindest einen Teil der durchdringbaren Wand zwischen dem Beutelinneren und dem Tascheninneren bildet.

7. Vorrichtung gemäß Anspruch 1-6, dadurch gekennzeichnet, daß der Beutel zumindest zwei Seiten aufweist, daß die einzige Plastikfolie einen ersten Außenbereich, der zumindest einen Teil der Wand zwischen dem Inneren und dem Äußeren des Beutels auf einer ersten Seite des Beutels bildet, einen ersten Innenbereich, eine erste Falte zwischen diesem Innenbereich und dem ersten Außenbereich, einen zweiten Innenbereich, eine zweite Falte zwischen diesem ersten Innenbereich und diesem zweiten Innenbereich, einen zweiten Außenbereich, der zumindest einen Teil der Wand zwischen dem Inneren und dem Äußeren des Beutels auf einer zweiten Seite des Beutels bildet, sowie eine dritte Falte zwischen diesem zweiten Innenbereich und diesem zweiten Außenbereich umfaßt, und daß der erste Außenbereich, der erste Innenbereich, der zweite Innenbereich und der zweite Außenbereich jeweils im wesentlichen parallel verlaufen und entlang einer Taschenverschweißung miteinander verschweißt sind, die sich im Abstand von der Innenfalte befindet, so daß der Teil des ersten Innenbereichs und zweiten Innenbereichs zwischen der Innenfalte und der Taschenverschweißung die Tasche bildet, wobei vorzugsweise die Außenseite des Anschlußstückkörpers an den ersten Innenbereich und den zweiten Innenbereich bei der Taschenverschweißung angeschweißt ist und die einzige Plastikfolie den ganzen Beutel und die Tasche bildet, und der erste Innenbereich und der zweite Innenbereich die durchdringbare Wand zwischen dem Beutelinneren und der Tasche umfassen.

8. Vorrichtung gemäß Anspruch 1-7, dadurch gekennzeichnet, daß der Beutel eine untere Ecke aufweist, und daß die Vorrichtung zum Zugänglichmachen in Nähe dieser unteren Beutelecke an der Tasche befestigt ist, und daß der Beutel ferner eine Vorrichtung zu seinem Aufhängen aufweist, wobei diese am oberen Bereich des Beutels derart befestigt ist, daß dieser von der Aufhängevorrichtung herabhängt, wobei die untere Ecke der niedrigste Punkt des Beutels darstellt, daß ferner einen Sporn zum Durchdringen der Wand zwischen dem Beutelinneren und der Tasche umfaßt, wobei der Sporn eine erste Öffnung in Nähe seiner Spitze, eine zweite Öffnung an dieser Spitze gegenüberliegenden Ende und einen direkten Durchgang zwischen diesen Öffnungen für die Flüssigkeitsströmung aufweist, und daß sie ferner eine an die zweite Öffnung des Sporns angekoppelte Schlauchleitung aufweist, um Flüssigkeit von dem Beutel einer gewünschten Zufuhrstelle zuzuführen, wobei vorzugsweise der Sporn eine dritte Öffnung mit einem Sekundärdurchgang umfaßt, der in Flüssigkeitsverbindung mit dem Primärdurchgang steht, um Flüssigkeit zuzugeben oder abzulassen.

9. Vorrichtung gemäß Anspruch 1-8, dadurch gekennzeichnet, daß die Tasche einen Taschenkörper mit einer Peripherie und einen Flansch, der sich um die Peripherie erstreckt umfaßt, wobei der Flansch an der durchdringbaren Wand angebracht ist, um die Tasche zu verschließen, und vorzugsweise mit einem Klebstoff an der durchdringbaren Wand dicht angebracht ist.

10. Vorrichtung gemäß Anspruch 2, dadurch gekennzeichnet, daß die Vorrichtung zum Zugänglichmachen einen mit einem Sporn durchdringbaren Bereich auf dem Taschenkörper unfaßt, wobei vorzugsweise der Taschenkörper becherförmig ist, der Flansch sich um die Becheröffnung erstreckt, und der durchdringbare Bereich sich am Boden des Bechers befindet oder der Sporn sich gegenüber dem durchdringbaren Bereich auf dem Taschenkörper und gegen die durchdringbare Wand des Beutels abdichtet.

11. Verfahren zur Herstellung eines Flüssigkeitsbehälters, dadurch gekennzeichnet, daß einen Satz von Plastifolien unter Bildung eines Beutels zur Aufnahme der Flüssigkeit und unter Bildung einer am Beutel befestigten Tasche faltet, in den Beutel ein Anschlußstück zum Zugänglichmachen des Beutels einbringt, und der Beutel die Tasche und das Anschlußstück für den Zugang zusammenschweißt.
